# EUROPEAN PATENT APPLICATION

(11) **EP 2 615 018 A1**
(43) Date of publication of application: **17.07.2013**
(21) Application number: 12150737.0
(22) Date of filing: 11.01.2012
(51) Int. Cl.: B62K 19/16, B62K 19/34

(54) **Reinforced bicycle frame**

(71) Applicant: Yuan Min An Enterprise Co., Ltd., Taichung City 420 (TW)
(72) Inventor: Yu, Kuo-Pin, 420 TAICHUNG CITY (TW)
(74) Representative: Becker Kurig Straus

(57) **Abstract**

A reinforced bicycle frame (10) is made from a fiber-reinforced material. The reinforced bicycle frame (10) includes a bottom bracket shell (20), a seat tube (22) upwardly extending from the bottom bracket shell (20), a down tube (24) forwardly extending from the bottom bracket shell (20), two chain stays (26) backwardly and respectively extending from the bottom bracket shell (20), and a rib (28). The bottom bracket shell (20) has a periphery wall (202) defining a chamber (204) and having two opposite lateral sides, each of which is provided with a round tube portion (206). The rib (28) extends toward the round tube portions (206) from one of a first junction between the seat tube (22) and the down tube (24) and a second junction between the seat tube (22) and the chain stays (26) so as to enhance the structural rigidity of the bottom bracket shell (20).

## Description

### BACKGROUND OF THE INVENTION

### 1. Field of the Invention

The present invention relates generally to bicycle frames, and more particularly, to a reinforced bicycle frame having a rib for enhancing a structural rigidity of a bottom bracket shell of the reinforced bicycle frame.

### 2. Description of the Related Art

Conventional bicycle frames are generally made from a metal material, which have a strong structural strength but however a heavy weight. Because of the advantage of light weight, the bicycle frames made from carbon fiber-reinforced resins are comprehensively developed and extensively commercially used in recent years. The aforesaid bicycle frame comprises a head tube, a top tube, a down tube, a seat tube, two seat stays, two chain stays and a bottom bracket shell having a through hole for insertion by an axle of a bottom bracket. Each of two ends of the axle is connected with a crank rotatably connected with a pedal. When the pedals receive the pedaling force from the bicyclist, the bottom bracket shell may bear a stress of a certain degree, which may damage the structure of the bottom bracket shell after the bicycle frame is used for a long time. In addition, if the bottom bracket shell of the bicycle frame has an insufficient structural rigidity, when an external force exerts on the bottom bracket shell, the bottom bracket shell tends to deform to consume the pedaling force, resulting in deterioration in the transmission efficiency of the pedaling power. In case the amount of the carbon fiber-reinforced resin used for making the bicycle frame is increased to build a relatively thicker wall of the bottom bracket shell for enhancing the structural rigidity of the bottom bracket shell, the total weight of the bicycle frame increases inevitably, resulting in that the bicyclist may have a strenuous bicycle riding. Therefore, the issue of how to take an optimum balance between the weight of the bicycle frame and the structural strength of the bottom bracket shell needs to be solved in developing the bicycle frame.

### SUMMARY OF THE INVENTION

The present invention has been accomplished in view of the above-noted circumstances. It is therefore the primary objective of the present invention to provide a reinforced bicycle frame having a high structural strength with a light weight so as to enhance the transmission efficiency of pedaling power.

To achieve the above-mentioned objective, the reinforced bicycle frame provided by the present invention is made from a fiber-reinforced material and comprises a bottom bracket shell, a seat tube upwardly extending from the bottom bracket shell, a down tube forwardly extending from the bottom bracket shell, two chain stays backwardly and respectively extending from the bottom bracket shell, and at least one rib. The bottom bracket shell has a periphery wall defining a chamber. The periphery wall of the bottom bracket shell has two opposite lateral sides, each of which is provided with a round tube portion that is communicated between the chamber and an outside of the bottom bracket shell. The at least one rib includes a first rib extending from one of a first junction between the seat tube and the down tube and a second junction between the seat tube and the chain stays toward the round tube portions.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a front view of a reinforced bicycle frame according to a first preferred embodiment of the present invention;
FIG. 2 is a perspective view of a part of the reinforced bicycle frame of the first preferred embodiment of the present invention;
FIG. 3 is a partially cross-sectional view of the reinforced bicycle frame of the first preferred embodiment of the present invention;
FIG. 4 is a partially cross-sectional view of a reinforced bicycle frame according to a second preferred embodiment of the present invention;
FIG. 5 is a partially cross-sectional view of a reinforced bicycle frame according to a third preferred embodiment of the present invention, and
FIG. 6 is a partially cross-sectional view of a reinforced bicycle frame according to a fourth preferred embodiment of the present invention.

### DETAILED DESCRIPTION OF THE INVENTION

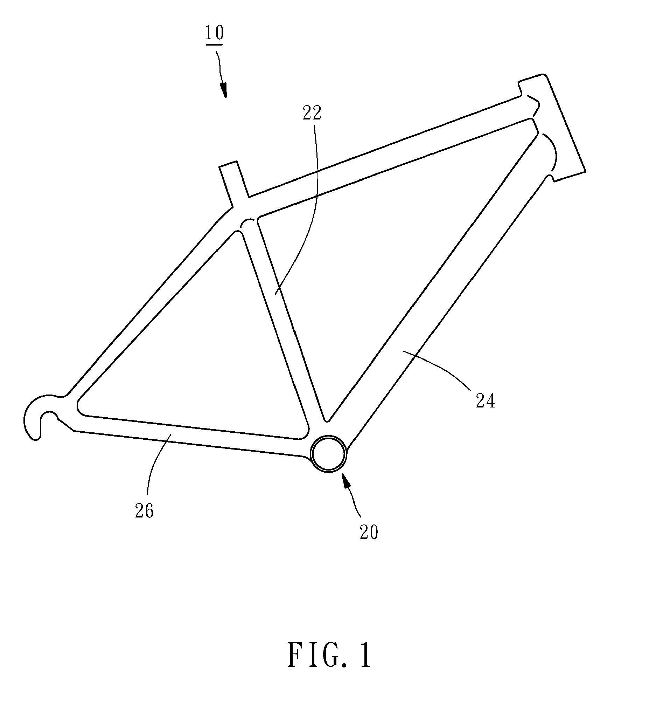

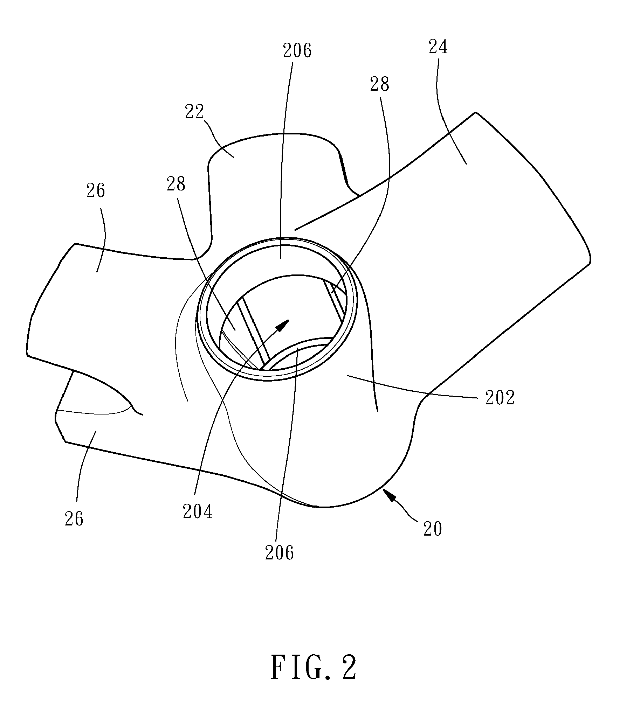

FIGS. 1-3 show a reinforced bicycle frame 10 configured according to a first preferred embodiment of the present invention. The reinforced bicycle frame 10 is made from a fiber-reinforced material, such as carbon fiber-reinforced resin. For the fiber used in the fiber-reinforced material, various kinds of fibers can be used, including but not limited to carbon fiber, boron fiber, glass fiber or Kevlar^{®} fiber. For the resin, thermoplastic or thermosetting resin can be used.

The reinforced bicycle frame 10 comprises a bottom bracket shell 20, a seat tube 22, a down tube 24, two chain stays 26 and two ribs 28, which are integrally formed as a monolithic frame. As can be seen from the drawings, the seat tube 22 extends upwardly from the bottom bracket shell 20, the down tube 24 extends forwardly from the bottom bracket shell 20, and the two chain stays 26 extend backwardly and respectively from the bottom bracket shell 20. The bottom bracket shell 20 includes a periphery wall 202 defining a chamber 204. Each of two opposite lateral sides of the periphery wall 202 is provided with a round tube portion 206 communicated between the chamber 204 and an outside of the bottom bracket shell 20. The two round tube portions 26 extend inwardly into the chamber 204 and are aligned in a line for insertion by an axle of a bottom bracket. One of the ribs 28, namely a first rib, extends from a first junction between the seat tube 22 and the down tube 24 toward the two round tube portions 206 and is connected with the round tube portions 206. The other one of the ribs 28, namely a second rib, extends from a second junction between the seat tube 22 and the chain stays 26 toward the two round tube portions 206 and is connected with the round tube portions 206. It will be appreciated that the reinforced bicycle frame 10 may be provided with only one of the ribs 28 according to an actual need.

The two ribs 28 have a little weight but can greatly enhance the structural strength or rigidity of the bottom bracket shell 20, resulting in that the bottom bracket shell 20 can not only bear a great stress without any damage in its structure but also enhance the transmission efficiency of the pedaling power because when an external force exerts on the bottom bracket shell 20, the bottom bracket shell 20 may deform slightly to consume less the pedaling force generated by the bicyclist.

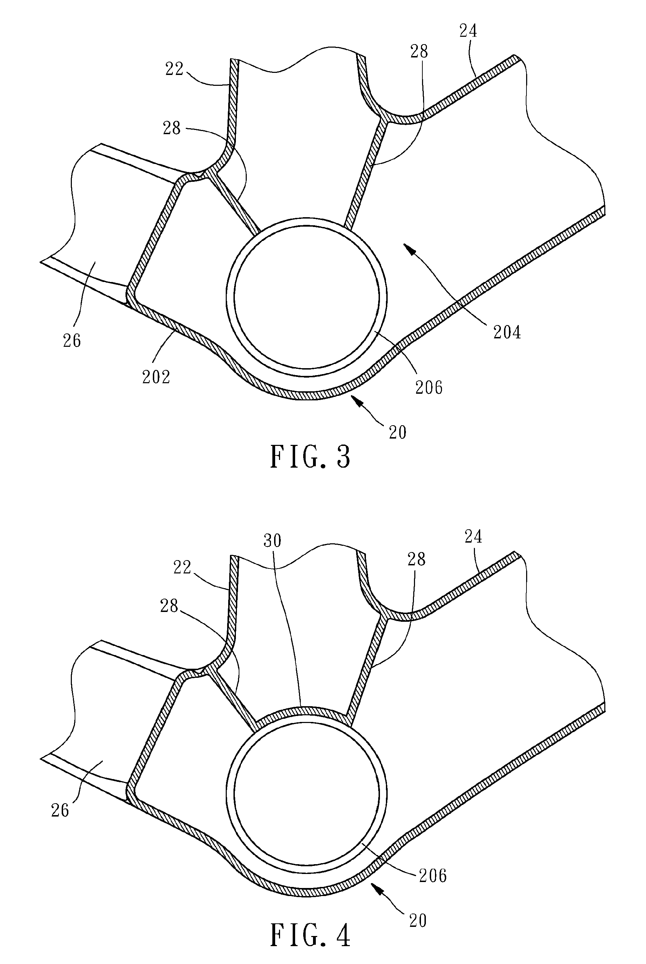

It should be understood that the reinforced bicycle frame 10 disclosed in the above-mentioned preferred embodiment is given for illustration of the essential technical features of the present invention only, not to limit the scope of the present invention. According to the technical features of the present invention, the reinforced bicycle frame of the present invention may be configured in various ways. For example, as shown in FIG. 4 illustrating a part of a reinforced bicycle frame according to a second preferred embodiment of the present invention, the reinforced bicycle frame further comprises a bridge 30. The bridge 30 is provided with two ends connected with the ends of the ribs 28 respectively, and the bridge 30 is also connected at a bottom surface thereof with the round tube portions 206. It is to be understood that the reinforced bicycle frame can be designed in a way that the two ends of the bridge 30 are connected to any positions of the lateral surfaces of the ribs 28. The bridge 30 can further enhance the structural strength or rigidity of the bottom bracket shell 20. In addition, the reinforced bicycle frame may comprise a plurality of bridges (not shown in the drawings) connected at two ends thereof between the two ribs 28 in a row.

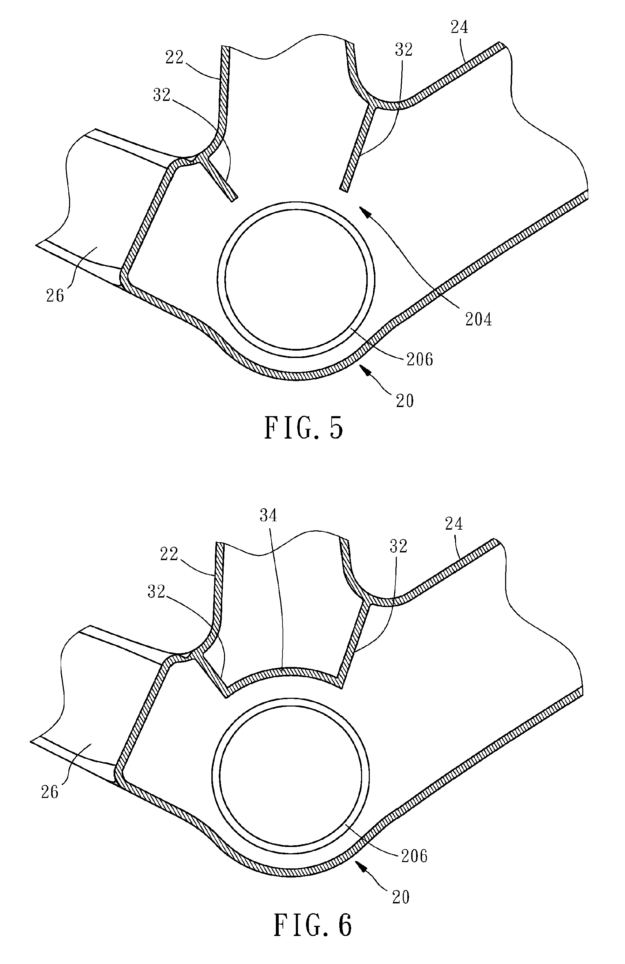

FIG. 5 shows a part of a reinforced bicycle frame according to a third preferred embodiment of the present invention. In this embodiment, the reinforced bicycle frame comprises two ribs 32, one of which downwardly extends from a junction between the seat tube 22 and the down tube 24 and is not connected with the round tube portions 206. The other rib 32 downwardly extends from a junction between the seat tube 22 and the chain stays 26 and is not connected with the round tube portions 206. In practice, the reinforced bicycle frame of the present invention may comprise only one of such ribs 32 according to an actual need.

FIG. 6 shows a part of a reinforced bicycle frame according to a fourth preferred embodiment of the present invention, which is basically the same as the reinforced bicycle frame disclosed in the above-mentioned third preferred embodiment, except that the reinforced bicycle frame in this embodiment further comprises a bridge 34 provided with two ends connected with the ends of the ribs 32 respectively. However, it is to be understood that the reinforced bicycle frame can be designed in such a way that the two ends of the bridge 34 are connected to any positions of the lateral surfaces of the ribs 32. In either way, the bridge 34 can enhance the structural strength or rigidity of the bottom bracket shell 20.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A reinforced bicycle frame (10) made from a fiber-reinforced material and **characterized in that** the reinforced bicycle frame (10) comprises:
a bottom bracket shell (20) having a periphery wall (202) defining a chamber (204) and having two opposite lateral sides, each of which is provided with a round tube portion (206) that is communicated between the chamber (204) and an outside of the bottom bracket shell (20);
a seat tube (22) upwardly extending from the bottom bracket shell (20);
a down tube (24) forwardly extending from the bottom bracket shell (20);
two chain stays (26) backwardly and respectively extending from the bottom bracket shell (20); and
at least one rib (28) comprising a first rib (28) extending from one of a first junction between the seat tube (22) and the down tube (24) and a second junction between the seat tube (22) and the chain stays (26) toward the round tube portions (206).

2. The reinforced bicycle frame (10) of claim 1, **characterized in that** the first rib (28) is connected with the round tube portions (206) of the bottom bracket shell (20).

3. The reinforced bicycle frame (10) of claim 1, **characterized in that** the at least one rib (28) comprises the first rib (28) extending from the first junction toward the round tube portions (206), and a second rib (28) extending from the second junction toward the round tube portions (206).

4. The reinforced bicycle frame (10) of claim 3, **characterized in that** the first and second ribs (28) are connected with the round tube portions (206).

5. The reinforced bicycle frame (10) of claim 3, **characterized in that** the reinforced bicycle frame (10) further comprises a bridge (30) having two ends connected with the first and second ribs (28) respectively.

6. The reinforced bicycle frame (10) of claim 5, **characterized in that** the bridge (30) is connected between an end of the first rib (28) and an end of the second rib (28).

7. The reinforced bicycle frame (10) of claim 1, **characterized in that** the round tube portions (206) of the bottom bracket shell (20) each protrude into the chamber (204).
